# EUROPEAN PATENT APPLICATION

(11) **EP 4 737 172 A1**
(43) Date of publication of application: **06.05.2026**
(21) Application number: 24831541.8
(22) Date of filing: 29.05.2024
(51) Int. Cl.: B60K 8/00, B60K 11/04, B62D 49/00, H01M 8/00, H01M 8/04

(54) **WORK VEHICLE**

(30) Priority: 30.06.2023 JP 2023107643
(71) Applicant: Kubota Corporation, Osaka 556-8601 (JP)
(72) Inventor: OHNISHI, Teppei, Sakai-shi, Osaka 590-0908 (JP)
(74) Representative: Cabinet Beau de Loménie
(86) International application number: PCT/JP2024/019634
(87) International publication number: WO 2025/004670

(57) **Abstract**

A work vehicle includes: a vehicle body; a fuel cell installed on the vehicle body; a radiator disposed side by side with the fuel cell; and a support member that supports the radiator, in which the support member includes a first support member connected to the vehicle body and the radiator, and a second support member connected to the fuel cell and the radiator.

## Description

### TECHNICAL FIELD

The present disclosure relates to a work vehicle such as a tractor.

### BACKGROUND ART

In recent years, there has been proposed a work vehicle such as a tractor including a fuel cell that generates electric power using gaseous fuel such as hydrogen gas, instead of an internal combustion engine using fossil fuel from the viewpoint of protecting the global environment, and an electric motor driven by the generated electric power.

For example, Patent Literature 1 discloses a work vehicle in which a driver's seat and a hood are installed on a vehicle body, and a battery that accumulates electricity generated by a fuel cell and a controller that controls an electric motor are housed in the hood together with the fuel cell. This type of work vehicle also requires a radiator for cooling the fuel cell.

### CITATION LIST

### [PATENT LITERATURE]

PATENT LITERATURE 1: Japanese Laid-Open Patent Publication No. 2023-013187

### SUMMARY OF THE INVENTION

A work vehicle of the present disclosure includes: a vehicle body; a fuel cell installed on the vehicle body; a radiator disposed side by side with the fuel cell; and a support member that supports the radiator, in which the support member includes a first support member connected to the vehicle body and the radiator, and a second support member connected to the fuel cell and the radiator.

### BRIEF DESCRIPTION OF DRAWINGS

[FIG. 1] FIG. 1 is a perspective view illustrating an embodiment of a work vehicle of the present disclosure.
[FIG. 2] FIG. 2 is a front view of the work vehicle.
[FIG. 3] FIG. 3 is a rear view of the work vehicle.
[FIG. 4] FIG. 4 is a side view (right side view) of the work vehicle.
[FIG. 5] FIG. 5 is a side view (left side view) of the work vehicle.
[FIG. 6] FIG. 6 is a plan view of the work vehicle.
[FIG. 7] FIG. 7 is a bottom view of the work vehicle.
[FIG. 8] FIG. 8 is an exploded perspective view illustrating a portion of the work vehicle.
[FIG. 9] FIG. 9 is a right side view of the work vehicle illustrating a state in which a hood, a cover, and a portion of a tank case of a tank unit are removed.
[FIG. 10] FIG. 10 is a front view of a second radiator and a periphery thereof.
[FIG. 11] FIG. 11 is a plan view of the second radiator and the periphery thereof.
[FIG. 12] FIG. 12 is a perspective view of the second radiator and the periphery thereof as viewed obliquely from the rear right side.
[FIG. 13] FIG. 13 is a perspective view of the second radiator and the periphery thereof as viewed obliquely from the front left side.
[FIG. 14] FIG. 14 is a perspective view of a mounting frame as viewed obliquely from the front left side.

### DETAILED DESCRIPTION

### <Problems to be solved by present disclosure>

In a fuel cell, since a cooling temperature is lower than that of an internal combustion engine and a heat generation amount increases as a load increases, a radiator with high cooling performance is required. When the size of the radiator is increased in order to enhance the cooling performance, the weight is also increased, and therefore strong support is required.

An object of the present disclosure is to provide a work vehicle capable of firmly supporting a radiator.

### <Effects of present disclosure>

According to the present disclosure, a radiator can be firmly supported.

### <Outline of embodiment of present disclosure>

Hereinafter, an outline of an embodiment of the present disclosure will be listed and described.
(1) A work vehicle according to an embodiment of the present disclosure includes: a vehicle body; a fuel cell installed on the vehicle body; a radiator disposed side by side with the fuel cell; and a support member that supports the radiator, in which the support member includes a first support member connected to the vehicle body and the radiator, and a second support member connected to the fuel cell and the radiator.

According to this configuration, the radiator can be firmly supported by the vehicle body and the fuel cell via the first and second support members.

(2) The work vehicle according to (1) preferably further includes a fixed frame fixed to the vehicle body, in which the support member includes a third support member connected to the fixed frame and the radiator.

According to this configuration, the radiator can be firmly supported by the fixed frame via the third support member.

(3) In the work vehicle according to (2), preferably, an electrical component is attached to the fixed frame.

With such a configuration, the radiator can be supported by using the fixed frame for attaching the electrical component.

(4) In the work vehicle according to (3), preferably, the fixed frame is disposed on a side in the radiator where air is sucked.

According to this configuration, since air at a relatively low temperature before passing through the radiator passes through the periphery of the electrical component attached to the fixed frame, the temperature rise of the electrical component can be suppressed.

(5) In the work vehicle according to (4), preferably, the radiator includes a fan that is disposed between the fuel cell and the fixed frame and generates an air flow from a side of the fixed frame toward a side of the fuel cell.

(6) In the work vehicle according to any one of (2) to (5), preferably, the fuel cell, the radiator, and the fixed frame are disposed in this order.

According to this configuration, the radiator can be firmly supported from both sides by the fuel cell and the fixed frame in a direction in which the fuel cell, the radiator, and the fixed frame are disposed.

(7) The work vehicle according to any one of (1) to (6) preferably further includes a support frame that supports a fuel tank for the fuel cell, in which the vehicle body includes a placing table on which the support frame is placed, and the first support member is provided on the placing table.

With such a configuration, the radiator can be supported by using the placing table on which the support frame of the fuel tank is placed.

(8) In the work vehicle according to any one of (1) to (7), preferably, the vehicle body includes a first hood that covers the fuel cell and a second hood that covers the radiator.

According to this configuration, it is sufficient to open or remove only the second hood at the time of performing maintenance such as inspection and replacement of the radiator, and the maintainability can be enhanced.

(9) The work vehicle according to any one of (1) to (8) preferably further includes an air cleaner that is disposed side by side with the fuel cell and the radiator and cleans air supplied to the fuel cell, in which the air cleaner is disposed on a side in the radiator where air is sucked.

According to this configuration, air with less contamination at a relatively low temperature before passing through the radiator can be taken into the air cleaner.

(10) In the work vehicle according to (9), preferably, the radiator includes a fan that is disposed between the fuel cell and the air cleaner and generates an air flow from a side of the air cleaner toward a side of the fuel cell.

### <Details of embodiment of present disclosure>

### [Overall configuration of work vehicle]

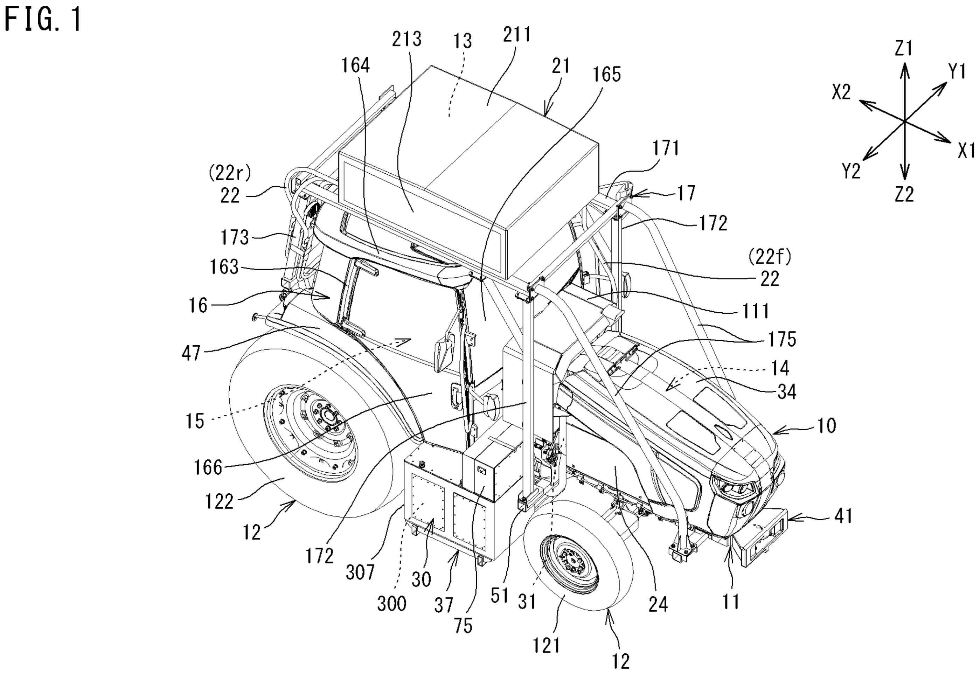

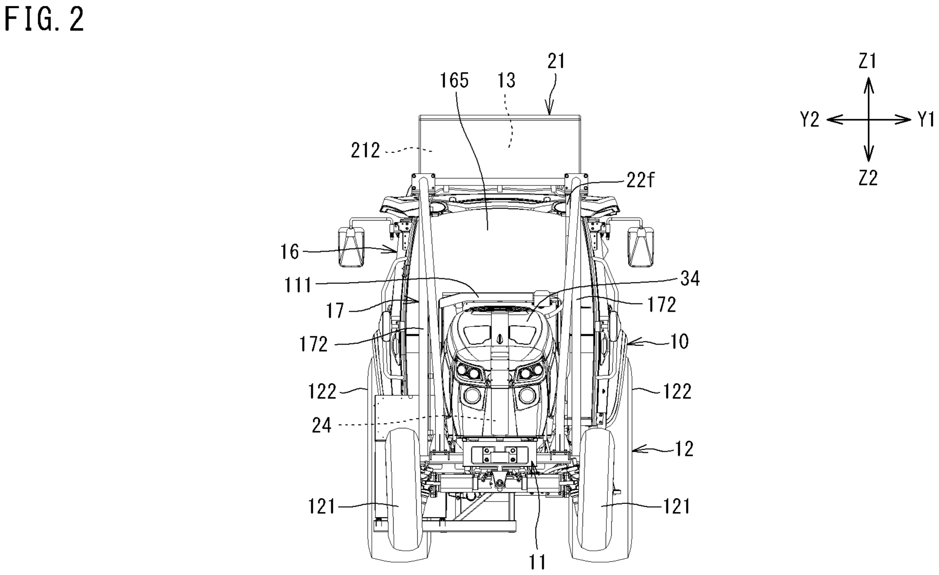

FIG. 1 is a perspective view illustrating an embodiment of a work vehicle of the present disclosure. FIGs. 2 to 7 are a front view, a rear view, a side view (right side view), a side view (left side view), a plan view, and a bottom view of the work vehicle illustrated in FIG. 1.

A work vehicle 10 of the present embodiment is a vehicle that can be used for farmwork. The work vehicle 10 illustrated in FIG. 1 is a tractor. The work vehicle 10 is not limited to a tractor. For example, the work vehicle 10 according to the present disclosure may be an agricultural machine other than a tractor, a construction machine, a utility vehicle, or the like. Examples of the agricultural machine include a harvesting machine, a rice transplanter, a transplanter, a mower, a seeder, and a fertilizing machine.

Hereinafter, a direction of the work vehicle 10 of the present disclosure will be defined. In the present specification, a direction in which the work vehicle 10 moves forward is defined as front, a direction in which the work vehicle 10 moves backward is defined as rear, a left side of the work vehicle 10 facing forward is defined as left, and a right side of the work vehicle 10 facing forward is defined as right. A left-right direction orthogonal to a front-rear direction is defined as a vehicle-width direction. A direction orthogonal to both the front-rear direction and the vehicle-width direction (left-right direction) is defined as a vertical direction. The vertical direction is also referred to as a height direction. The front-rear direction and the vehicle-width direction are horizontal directions. Therefore, in the present specification, the "front-rear direction" and the "vehicle-width direction" can be read as the "horizontal direction".

In each drawing, orthogonal three-dimensional coordinates are illustrated. In each drawing, a front direction is indicated by an arrow X1, and a rear direction is indicated by an arrow X2. A left direction is indicated by an arrow Y1, and a right direction is indicated by an arrow Y2. An upper direction is indicated by an arrow Z1, and a lower direction is indicated by an arrow Z2.

The work vehicle 10 illustrated in FIG. 1 includes a vehicle body 11, a traveling device 12, a driver's seat 15, a cabin 16, a tank unit 21, and a drive device 14. The traveling device 12 supports the vehicle body 11 in a travelable manner. The tank unit 21 includes a tank 13 that stores fuel. The drive device 14 drives the work vehicle 10 with the fuel stored in the tank 13.

In the present embodiment, the fuel is hydrogen. The tank 13 is a hydrogen tank that stores hydrogen gas. The work vehicle 10 of the present embodiment is a fuel cell vehicle (FCV). The work vehicle 10 travels using electric power generated by a fuel cell (fuel cell module) 24 using hydrogen and oxygen.

The drive device 14 includes the fuel cell 24, a battery unit 30, and an electric motor 31. The battery unit 30 includes a battery 300 that accumulates the electric power generated by the fuel cell 24. The battery unit 30 supplies the stored electric power to the motor 31.

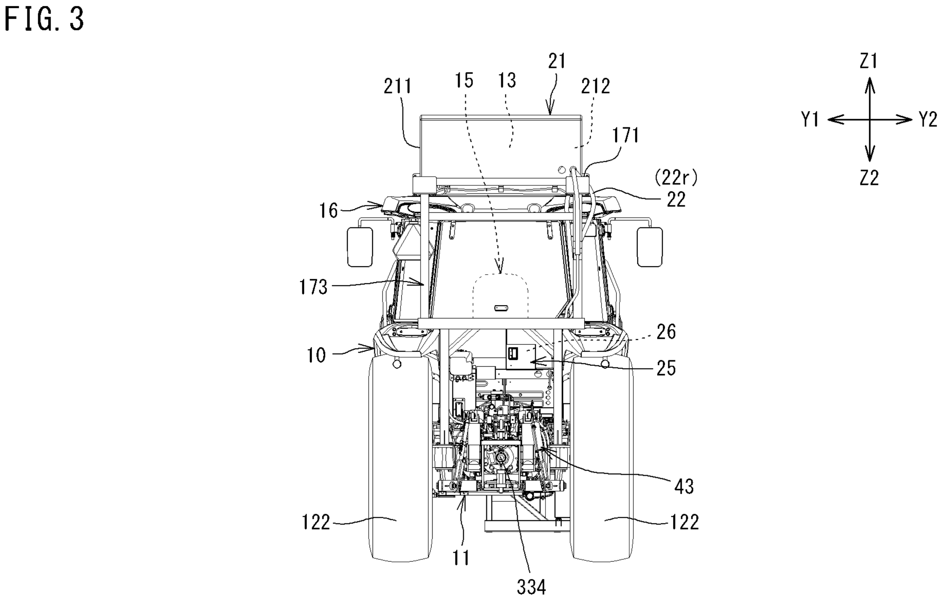

The work vehicle 10 includes a pipe (hydrogen pipe) 22 for hydrogen gas and a filling unit 25 (see FIG. 3). The filling unit 25 includes a filling port (receptacle) 26. The filling port 26 is connected to a filling nozzle of a hydrogen gas supply machine (not illustrated) separate from the work vehicle 10. The hydrogen gas is supplied from the filling port 26. The hydrogen gas is supplied from the filling port 26 to the tank 13 through the pipe 22 (rear pipe 22r). The hydrogen gas in the tank 13 is supplied to the fuel cell 24 through the pipe 22 (front pipe 22f). Specific configurations of the filling unit 25 and the pipe 22 will be described later.

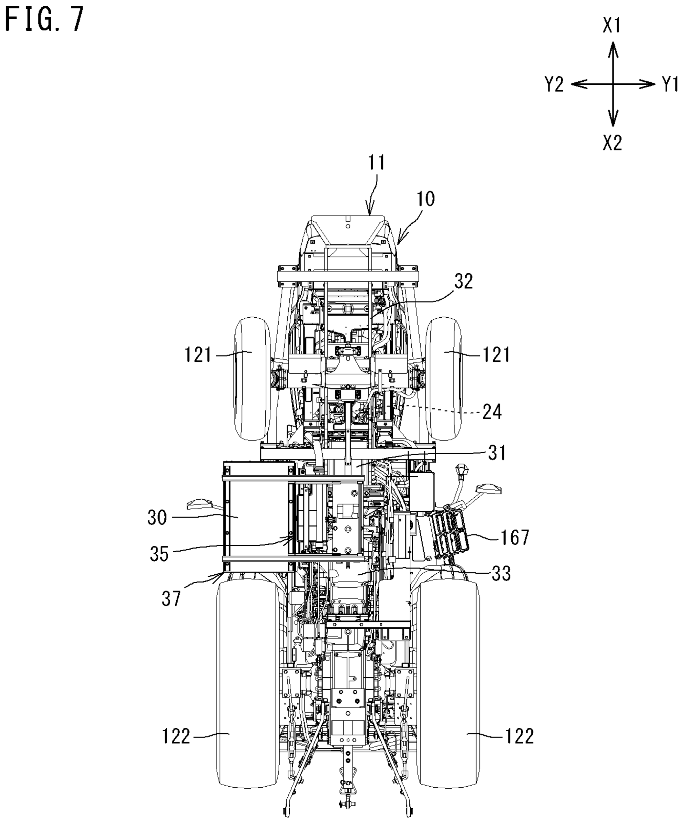

As illustrated in FIG. 1, the work vehicle 10 includes an installation frame 17 and a support structure 37. The installation frame 17 is used for installing the tank unit 21 (tank 13) on the vehicle body 11. The support structure 37 is used to support the battery unit 30 on the vehicle body 11. As illustrated in FIG. 7, the work vehicle 10 includes a discharge path 35. The discharge path 35 discharges water or water vapor generated by the operation of the fuel cell 24 to the outside. A specific configuration of the installation frame 17 will be described later.

### [Vehicle body 11]

The vehicle body 11 includes a chassis 41, a hood 34, a cover 111, and fenders 47. Each fender 47 covers a corresponding rear wheel 122 from above.

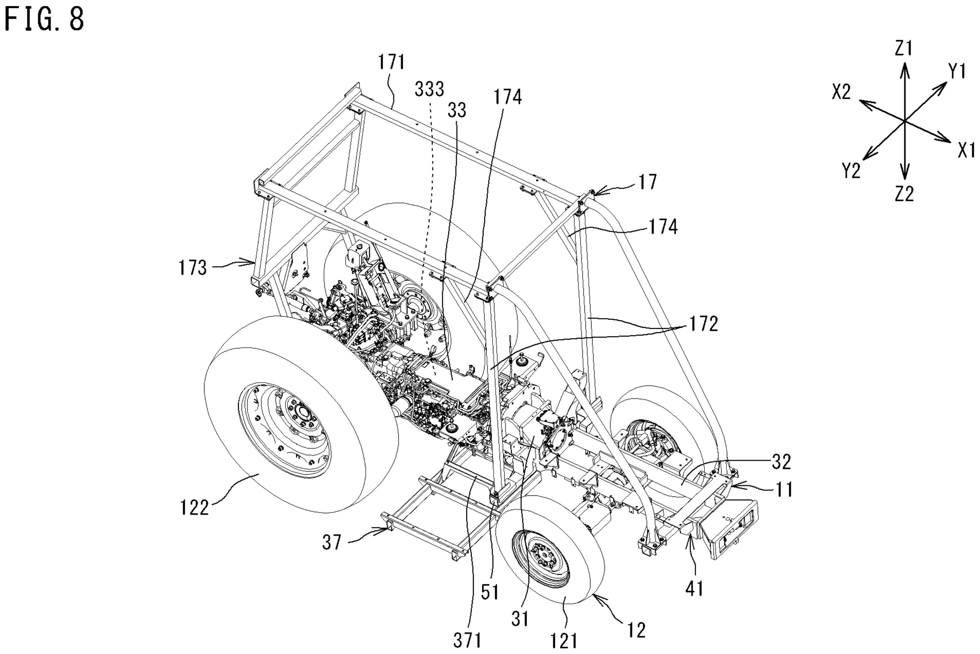

The chassis 41 supports the traveling device 12, the drive device 14, and the cabin 16. FIG. 8 is an exploded perspective view illustrating a portion of the work vehicle 10 illustrated in FIG. 1. The chassis 41 is located at the center in the vehicle-width direction and has a shape long in the front-rear direction. The chassis 41 includes a front frame 32 constituting a front portion of the chassis 41, and a gear case 33 connected to a rear end of the front frame 32 and constituting a rear portion of the chassis 41. The front frame 32 is formed by combining metal frame members (such as plate material and rod material) and the like. The gear case 33 includes a metal box. The gear case 33 is coupled to the rear portion of the front frame 32, and a framework of the vehicle body 11 is formed by the gear case 33 and the front frame 32.

The motor 31 is installed on the front frame 32. The gear case 33 includes a power transmission mechanism 333 such as a clutch, a transmission, and a differential gear therein. The power transmission mechanism 333 decelerates or accelerates the rotation of an output shaft of the motor 31, and outputs the rotation to the traveling device 12 (one or both of front wheels 121 and rear wheels 122).

The power transmission mechanism 333 outputs a portion of the power of the motor 31 to a PTO shaft 334 (see FIG. 3). The PTO shaft 334 is an output shaft provided at a rear portion of the gear case 33. The work vehicle 10 includes a coupling device 43 for coupling a separate instrument behind the vehicle body 11. The PTO shaft 334 transmits power of the motor 31 to the separate instrument coupled to the coupling device 43. The separate instrument is a working device (not illustrated), and is also called an implement. The working device is operated by power of the motor 31. The working device is a cultivator or the like.

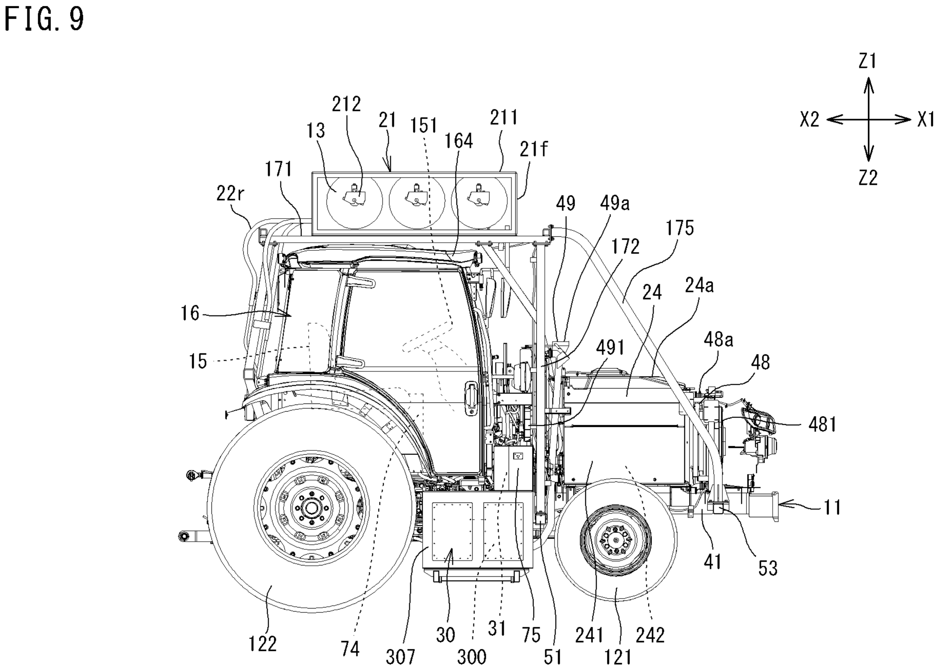

FIG. 9 is a right side view of the work vehicle 10 illustrating a state in which the hood 34, the cover 111, and a portion of a tank case 211 of the tank unit 21 are removed. On the chassis 41, a first radiator 48, the fuel cell 24, and a second radiator 49 are installed in this order from the front to the rear of the vehicle. The first radiator 48, the fuel cell 24, and the second radiator 49 are disposed at the center of the vehicle body 11 in the vehicle-width direction.

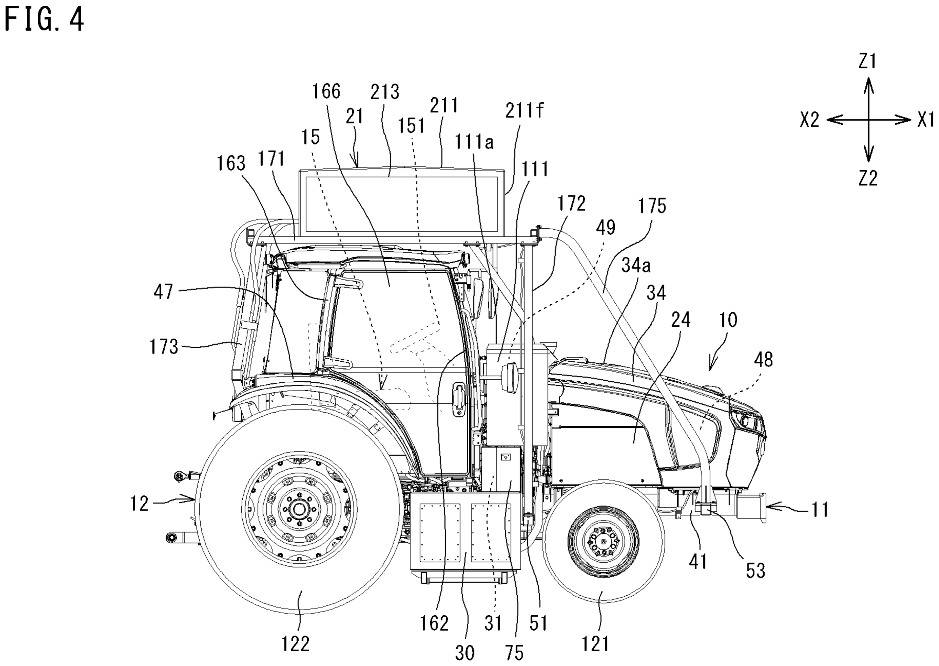

As illustrated in FIGs. 4 and 9, the hood (first hood) 34 and the cover (second hood) 111 cover the installed components located closer to the front of the vehicle body 11. The hood 34 covers the fuel cell 24 and the first radiator 48 from above and from both sides in the vehicle-width direction. The cover 111 covers the second radiator 49 located behind the fuel cell 24 from above and from both sides in the vehicle-width direction.

As illustrated in FIG. 9, an upper surface 48a of the first radiator 48 is lower than an upper surface 24a of the fuel cell 24. The upper surface 24a of the fuel cell 24 is lower than an upper surface 49a of the second radiator 49. A front portion side of the upper surface 24a of the fuel cell 24 is inclined obliquely forward and downward. As illustrated in FIG. 4, an upper surface 111a of the cover 111 is higher than an upper surface 34a of the hood 34. The upper surface 111a of the cover 111 is lower than an upper end of a steering wheel 151 operated for steering by a worker sitting on the driver's seat 15. The upper surface 34a of the hood 34 gets lower toward the front. Therefore, the field of view is less likely to be obstructed for the worker sitting on the driver's seat 15.

### [Driver's seat 15 and cabin 16]

As illustrated in FIG. 1, the driver's seat 15 and the cabin 16 are provided on the chassis 41 at positions closer to the rear, particularly on the gear case 33. The cabin 16 internally includes the driver's seat 15. The cabin 16 is disposed around the driver's seat 15. The cabin 16 includes front pillars 162 located in front of the driver's seat 15, rear pillars 163 located behind the driver's seat 15, and a roof 164 located above the driver's seat 15. The front pillars 162 are provided at a left front side and a right front side of the driver's seat 15. The rear pillars 163 are provided at a left rear side and a right rear side of the driver's seat 15. The roof 164 is supported by the front pillars 162 and the rear pillars 163.

The cabin 16 has a windshield 165 located in front of the driver's seat 15. The windshield 165 is provided between the left and right front pillars 162. The cabin 16 has openable and closable doors 166 on both sides in the vehicle-width direction. The doors 166 are provided between the front pillars 162 and the rear pillars 163.

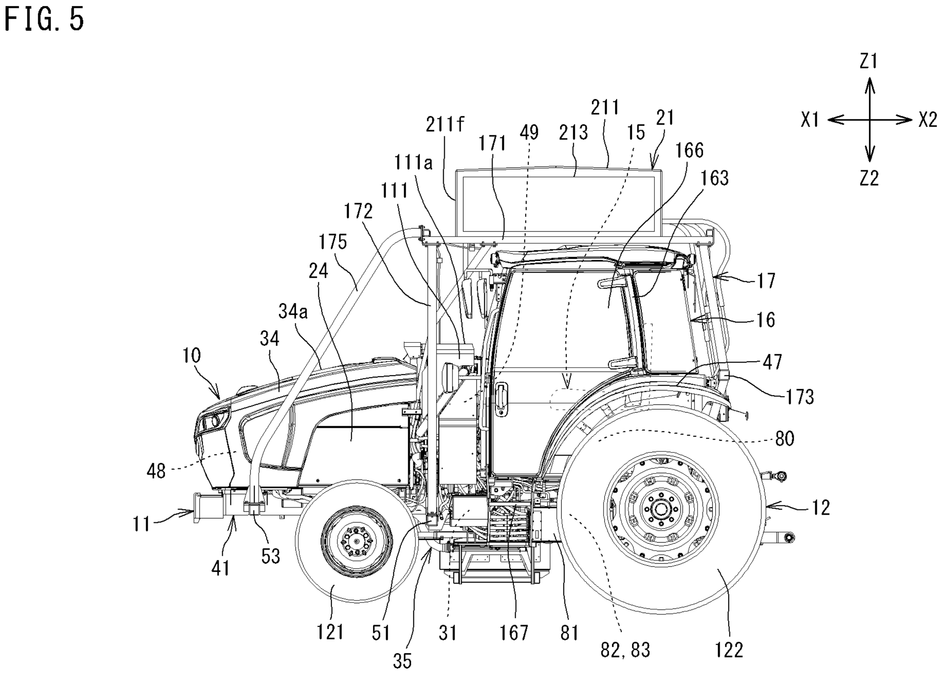

A step 167 is provided at one side (left side) of the cabin 16 in the vehicle-width direction (see FIG. 5). The step 167 is a member on which the worker who gets on and off the cabin 16 puts his/her foot.

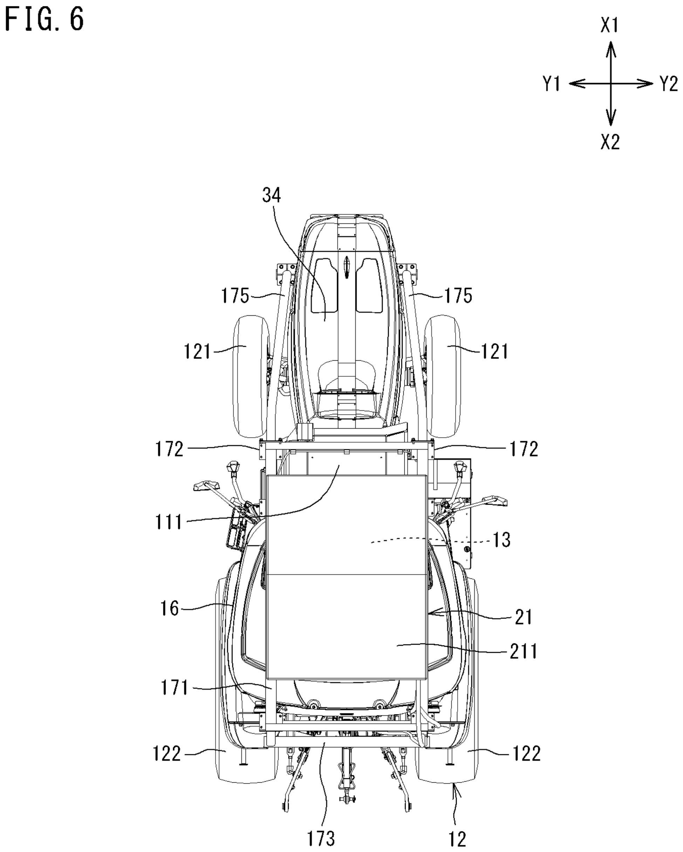

The cover 111 and the hood 34 are provided in front of the cabin 16. As illustrated in FIGs. 2 and 6, the dimensions of the cover 111 and the hood 34 in the vehicle-width direction are smaller than the dimension of the cabin 16 in the vehicle-width direction. The dimension of the hood 34 in the vehicle-width direction is smaller than the dimension of the cover 111 in the vehicle-width direction.

The work vehicle 10 of the present embodiment includes the cabin 16, but may not include the cabin 16. The work vehicle 10 may include a canopy or a rollover protective structure (ROPS) instead of the cabin 16. In a case where the work vehicle 10 does not include the cabin 16, the tank unit 21 is supported by the installation frame 17 and located above the driver's seat 15.

### [Traveling device 12]

The traveling device 12 includes the front wheels 121 and the rear wheels 122 (see FIG. 6). The front wheels 121 are provided at the left and right of the front portion of the vehicle body 11. The rear wheels 122 are provided at the left and right of the rear portion of the vehicle body 11. The maximum dimension of the left and right rear wheels 122 in the vehicle-width direction (dimension between an outer end of the left rear wheel 122 in the vehicle-width direction and an outer end of the right rear wheel 122 in the vehicle-width direction) is larger than the maximum dimension of the left and right front wheels 121 in the vehicle-width direction (dimension between an outer end of the left front wheel 121 in the vehicle-width direction and an outer end of the right front wheel 121 in the vehicle-width direction). The maximum dimension of the left and right rear wheels 122 in the vehicle-width direction is the maximum vehicle width dimension of the work vehicle 10.

One or both of the front wheels 121 and the rear wheels 122 are rotated by the power of the motor 31. One or both of the front wheels 121 and the rear wheels 122 (drive wheels) rotated by the power of the motor 31 may be crawlers (caterpillars).

### [Drive device 14]

As described above, the drive device 14 includes the fuel cell 24, the battery unit 30, and the motor 31.

As illustrated in FIG. 9, the fuel cell 24 is located on the chassis 41 closer to the front of the vehicle body 11. As illustrated in FIG. 8, the motor 31 is located behind the fuel cell 24. The motor 31 is located at the center of the vehicle body 11 in the vehicle-width direction. As illustrated in FIG. 1, the battery unit 30 is located closer to the outside of the vehicle body 11 in the vehicle-width direction. The battery unit 30 is attached to the chassis 41 by the support structure 37.

The fuel cell 24 generates electric power by hydrogen gas, and obtains electric power for rotating the motor 31. As illustrated in FIG. 9, the fuel cell 24 includes a cell casing 241 having a substantially rectangular box shape, and a fuel cell stack 242 provided inside the cell casing 241. The fuel cell stack 242 includes a plurality of battery cells. The battery cells each have a positive electrode and a negative electrode. The plurality of single cells is in a stacked state. The electric power generated by each battery cell is aggregated and output to the battery unit 30.

The motor 31 includes a rotating rotor and a stator including a plurality of coils. As illustrated in FIG. 8, the output shaft of the motor 31 is coupled to the power transmission mechanism 333 in the gear case 33. The motor 31 is located behind the fuel cell 24 and below the second radiator 49.

### [Tank unit 21]

As illustrated in FIG. 9, the tank unit 21 includes the tank (fuel tank) 13 and the tank case 211 that houses the tank 13. The tank 13 is a substantially cylindrical high-pressure container. The tank 13 is made of a fiber-reinforced resin or the like reinforced with carbon fibers or glass fibers. In the present embodiment, three tanks 13 are fixed to the tank case 211 in a state where the axial direction of the cylindrical portion is parallel to the vehicle-width direction. The number of tanks 13 is not limited to three.

The tank case 211 is a box capable of housing one or a plurality of the tanks 13. The tank case 211 has a box shape that covers the entire tank 13 to be housed. The tank case 211 includes an openable/closable door(s) 213 (see FIG. 1) on one or both sides in the vehicle-width direction, and is opened in the vehicle-width direction. The tank case 211 is placed above the roof 164 at a distance from the roof 164 in the vertical direction. The tank case 211 is fixed to an upper frame portion 171 of the installation frame 17. The tank case 211 is made of metal such as aluminum or steel, and protects the tank 13 against thermal and physical influences from the outside.

The tank 13 is disposed above the cabin 16 (driver's seat 15). Therefore, a degree of freedom in arrangement of the fuel cell 24, the filling unit 25, the motor 31, and the battery unit 30 in the vehicle body 11 is high. In a case where a conventional work vehicle using an internal combustion engine is converted into the work vehicle 10 including the fuel cell 24 and the motor 31 as in the present embodiment, it is not necessary to significantly change the arrangement configuration of each instrument.

As illustrated in FIG. 9, the tank 13 is coupled to the rear pipe 22r and the front pipe 22f via a valve unit 212 (see FIG. 2). As illustrated in FIG. 3, the rear pipe 22r is a gas introduction pipe line connecting the filling port 26 for hydrogen gas and the valve unit 212, and guides hydrogen gas introduced into the filling port 26 to the tank 13. As illustrated in FIG. 2, the front pipe 22f is a gas outlet pipe line connecting the fuel cell 24 and the valve unit 212, and guides hydrogen gas stored in tank 13 to the fuel cell 24. The tank 13 stores hydrogen gas introduced into the filling port 26 from the outside of the vehicle, and supplies the hydrogen gas to the fuel cell 24. The valve unit 212 includes an on-off valve, a pressure reducing valve, and the like, adjusts the hydrogen gas stored in the tank 13 to a predetermined flow rate, and guides the hydrogen gas to the fuel cell 24 through the front pipe 22f.

### [Installation frame 17]

The installation frame (support frame) 17 (see FIG. 1) is a frame structure for installing the tank 13 on the vehicle body 11. The installation frame 17 of the present embodiment includes the upper frame portion 171 that supports the tank 13, and a first front frame portion 172, a second front frame portion 175, and a rear frame portion 173 as frames for supporting the upper frame portion 171. In the present embodiment, the tank case 211 is attached to the upper frame portion 171. That is, the upper frame portion 171 supports the tank 13 via the tank case 211.

The rear frame portion 173 is provided with the filling unit 25 (see FIG. 3). The filling unit 25 includes the gas filling port 26 that connects the gas filling nozzle of the hydrogen gas supply machine (not illustrated) placed outside the vehicle at the time of filling the tank 13 with hydrogen gas.

### [Radiator]

The work vehicle 10 (see FIGs. 4 and 5) includes a cooling system that cools the fuel cell 24, the motor 31, a step-up circuit 80, an inverter 81, DC/DC converters 82 and 83, and the like with a coolant. As a portion of the cooling system, the work vehicle 10 includes the first radiator 48 and the second radiator 49. As illustrated in FIG. 9, the first radiator 48 is located in front of the fuel cell 24, and the second radiator 49 is located behind the fuel cell 24.

The first radiator 48 cools instruments other than the fuel cell 24. The first radiator 48 is connected to electric components (heat generating components) such as the motor 31, the step-up circuit 80, the inverter 81, and the DC/DC converters 82 and 83, which require cooling, through a first cooling flow channel (not illustrated) including a circulation pump. The first radiator 48 cools the coolant supplied through the first cooling flow channel by heat exchange with the external air.

The second radiator 49 cools the fuel cell 24. The second radiator 49 is connected to the fuel cell 24 through a second cooling flow channel (not illustrated) including a circulation pump. The second radiator 49 cools the coolant supplied through the second cooling flow channel by heat exchange with the external air.

The first radiator 48 includes a first fan 481. The second radiator 49 includes a second fan 491. The first fan 481 and the second fan 491 rotate to allow air to pass through the first radiator 48 and the second radiator 49, respectively, thereby promoting heat exchange with the coolant. Note that the first radiator 48 may cool the fuel cell 24, and the second radiator 49 may cool instruments other than the fuel cell 24.

### [Battery unit 30]

The battery unit 30 accumulates electric power to be supplied to the motor 31. The battery unit 30 (see FIG. 9) includes a battery (battery pack) 300 and a housing 307 that houses the battery 300. The battery 300 temporarily stores electric power generated by the fuel cell 24, and outputs the stored electric power to electric devices (electric components) such as the motor 31. The battery 300 includes a plurality of battery cells. The battery 300 is a charge/discharge type secondary battery such as a lithium ion battery or a lead storage battery.

### [Electrical system]

The work vehicle 10 includes a junction box 75. The junction box 75 is an electrical connection box for performing relay connection and distribution of electric power output from the battery unit 30.

The fuel cell 24 is connected to the inverter 81 via a step-up circuit (see FIG. 5). The battery unit 30 is connected to the inverter 81 through the junction box 75. The inverter 81 is electrically connected to the motor 31. The inverter 81 converts DC power output from the step-up circuit into three-phase AC power and outputs the three-phase AC power to the motor 31.

The work vehicle 10 includes low-voltage electric components that operate at a voltage lower than that of the motor 31. The electric power stepped down by a step-down circuit is supplied to the low-voltage electric components through the junction box 75. The work vehicle 10 of the present embodiment includes the battery unit 30, the radiators 48 and 49, and an air conditioner 74 as the low-voltage electric components. The work vehicle 10 includes the first DC/DC converter 82 and the second DC/DC converter 83 as the step-down circuit.

### [Specific configuration of second radiator 491

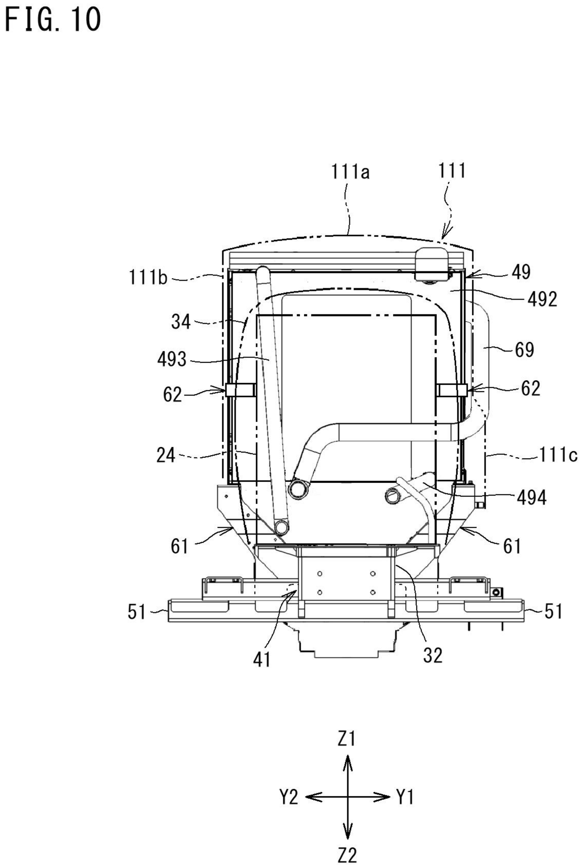

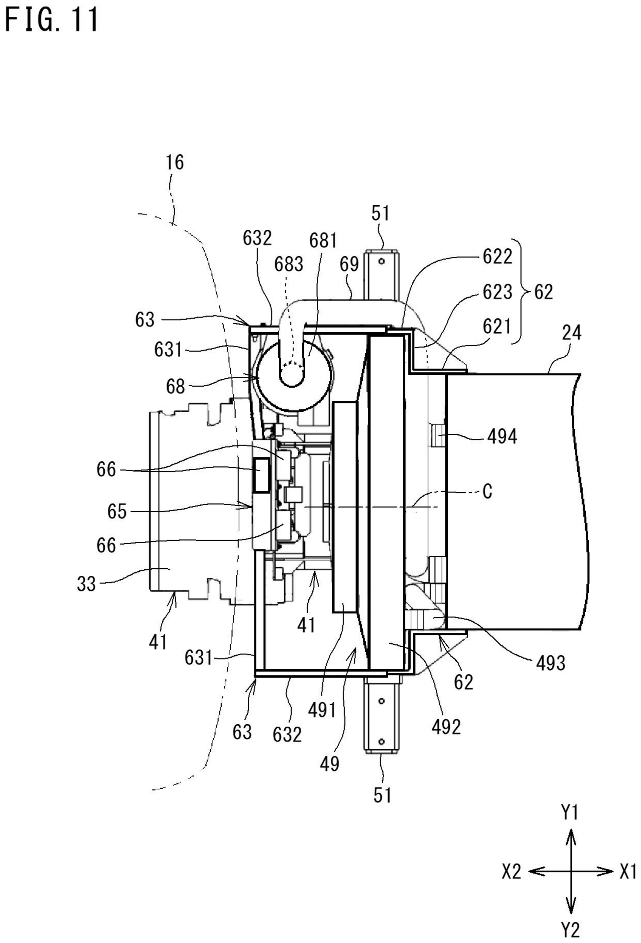

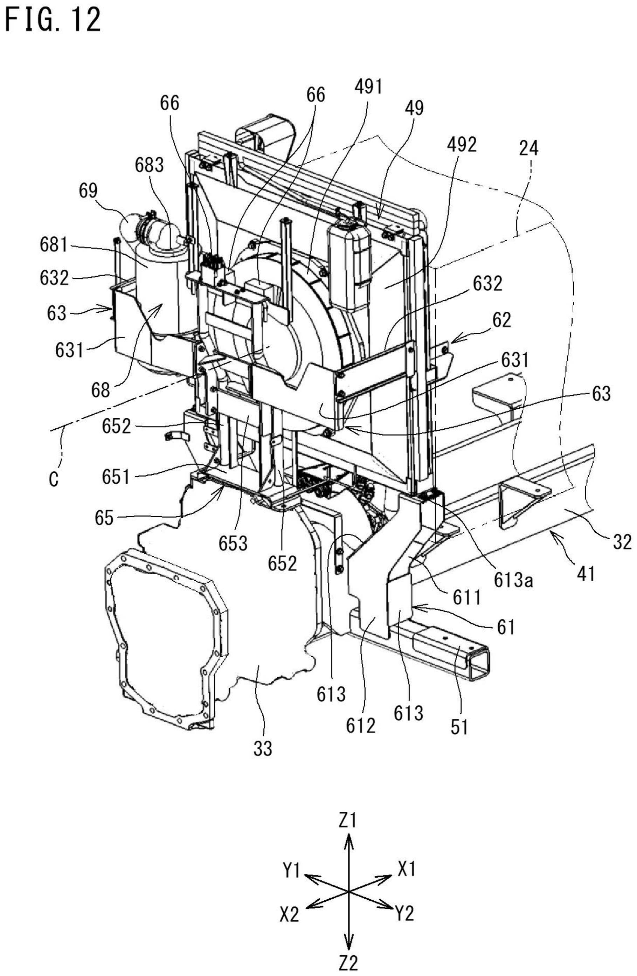

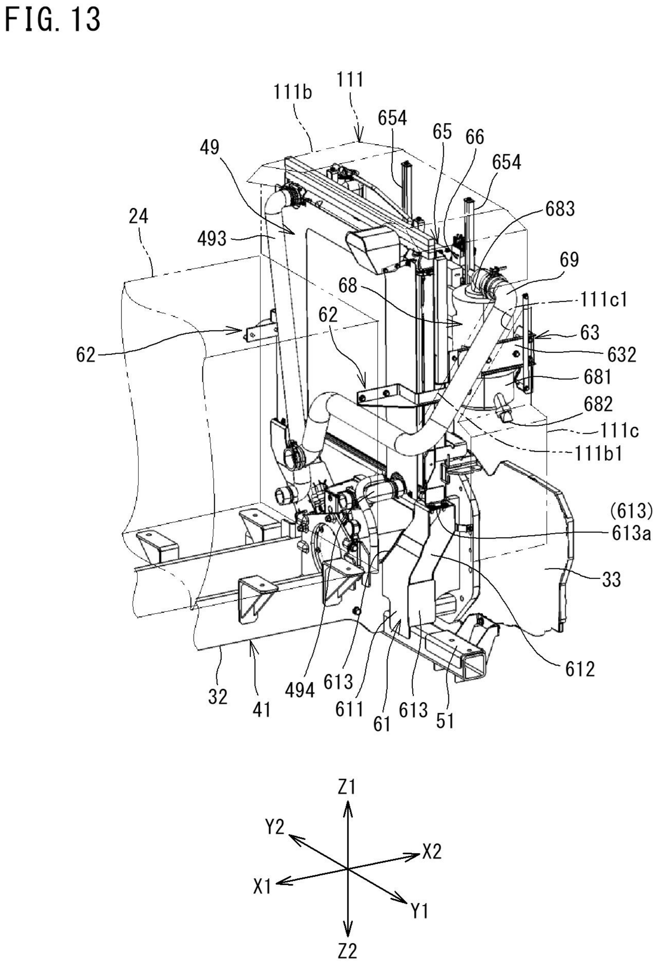

FIG. 10 is a front view of the second radiator and a periphery thereof. FIG. 11 is a plan view of the second radiator and the periphery thereof. FIG. 12 is a perspective view of the second radiator and the periphery thereof as viewed obliquely from the rear right side. FIG. 13 is a perspective view of the second radiator and the periphery thereof as viewed obliquely from the front left side.

The second radiator 49 includes a radiator body 492 through which the coolant flows, and the fan (second fan) 491 that supplies an air flow to the radiator body 492. The fan 491 is disposed behind the radiator body 492. The fan 491 rotates about an axis C (see FIG. 12) in the front-rear direction to generate an air flow from the rear toward the front. In other words, the fan 491 generates an air flow flowing in a direction in which the second radiator 49 and the fuel cell 24 are arranged. The cabin 16 is disposed behind the second radiator 49. Since the fan 491 of the second radiator 49 generates an air flow flowing from the rear toward the front, the air flow heated by the radiator body 492 is less likely to flow to the driver's seat 15 side, and an increase in the temperature in the cabin 16 or discomfort to the driver can be suppressed.

As illustrated in FIG. 10, the dimension (length) of the second radiator 49 in the vehicle-width direction is larger than the dimension (length) of the fuel cell 24 in the vehicle-width direction. The height of the second radiator 49 is larger than the height of the fuel cell 24. Therefore, the second radiator 49 projects in the vehicle-width direction and upward more than the fuel cell 24. The height of the second radiator 49 is larger than the height of the hood 34 covering the fuel cell 24. The dimension of the second radiator 49 in the vehicle-width direction is substantially equal to the dimension (length) of the hood 34 in the vehicle-width direction or larger than the dimension of the hood 34 in the vehicle-width direction. The height of the cover 111 covering above and lateral sides in the vehicle-width direction of the second radiator 49 is larger than the height of the hood 34. The dimension (length) of the cover 111 in the vehicle-width direction is substantially equal to the dimension of the hood 34 in the vehicle-width direction or larger than the dimension of the hood 34 in the vehicle-width direction.

Since the dimension and height of the second radiator 49 in the vehicle-width direction are larger than the dimension and height of the fuel cell 24 in the vehicle-width direction, the second radiator 49 is increased in size, and is disposed projecting outward in the vehicle-width direction and upward more than the fuel cell 24. Therefore, the flow of air passing through the second radiator 49 is less likely to be obstructed by the fuel cell 24. As a result, the heat exchange capacity of the second radiator 49 can be increased, and the cooling performance of the fuel cell 24 can be improved.

The second radiator 49 includes a first hose 493 and a second hose 494 that connect the radiator body 492 and the fuel cell 24. The coolant supplied from the radiator body 492 to the fuel cell 24 flows through the second hose 494, and the coolant returning from the fuel cell 24 to the radiator body 492 flows through the first hose 493. One ends of the first and second hoses 493 and 494 are connected to a front surface of the second radiator 49, and the other ends of the first and second hoses 493 and 494 are connected to a rear surface of the fuel cell 24. Therefore, the first and second hoses 493 and 494 are at least within the range of the dimension of the second radiator 49 in the vehicle-width direction. In the present embodiment, each of the hoses 493 and 494 is within the range of the dimension of the fuel cell 24 in the vehicle-width direction.

As illustrated in FIGs. 12 and 13, the second radiator 49 is supported by the chassis 41 of the vehicle body 11 via first support members 61. Each of the first support members 61 obliquely extends outward and upward in the vehicle-width direction from a side surface of the front frame 32 of the chassis 41. Specifically, the first support member 61 includes a front plate 611, a rear plate 612, and a plurality of connection plates 613 connecting the front plate 611 and the rear plate 612, and has a substantially hollow box shape inside. The plurality of connection plates 613 connects the front plate 611 and the rear plate 612 at inner sides, outer sides, and upper ends in the vehicle-width direction. A lower surface of the second radiator 49 is installed on an upper surface of an upper connection plate 613a connecting the upper ends of the front plate 611 and the rear plate 612, and they are fixed by a fixing tool such as a bolt.

The front frame 32 of the chassis 41 is provided with a pair of placing tables 51 extending to respective outer sides in the vehicle-width direction. As illustrated in FIG. 1, a lower end of the first front frame portion 172 of the installation frame 17 is placed and fixed on a corresponding one of the placing tables 51. A base end portion of the first support member 61 is also connected to the placing table 51. Therefore, the second radiator 49 is also supported by the placing tables 51, which support the installation frame 17, via the first support members 61.

Since the second radiator 49 is supported from below by the first support members 61 projecting upward from the chassis 41, the second radiator 49 can be easily disposed at a position higher than the fuel cell 24.

As illustrated in FIG. 12, the second radiator 49 is supported by the fuel cell 24 via second support members 62. The second support members 62 are belt-like plate members long in the front-rear direction. A front end of each of the second support members 62 is connected to the fuel cell 24. A rear end portion of the second support member 62 is connected to the second radiator 49. The second support members 62 are provided on respective sides of the second radiator 49 and the fuel cell 24 in the vehicle-width direction. Therefore, the second radiator 49 is supported by the fuel cell 24 via the second support members 62 from the front side.

Since the dimension of the second radiator 49 in the vehicle-width direction is larger than the dimension of the fuel cell 24 in the vehicle-width direction, the connection portions of the second support members 62 to the fuel cell 24 are disposed on the inner side in the vehicle-width direction than the connection portions of the second support members 62 to the second radiator 49. Specifically, the second support member 62 includes a front plate 621 connected to the fuel cell 24, a rear plate 622 connected to the second radiator 49, and an intermediate plate 623 connecting the front plate 621 and the rear plate 622. The front plate 621 and the rear plate 622 extend in the front-rear direction, and the intermediate plate 623 extends in the vehicle-width direction. Therefore, the second support member 62 is formed in a substantially Z-shape in top view.

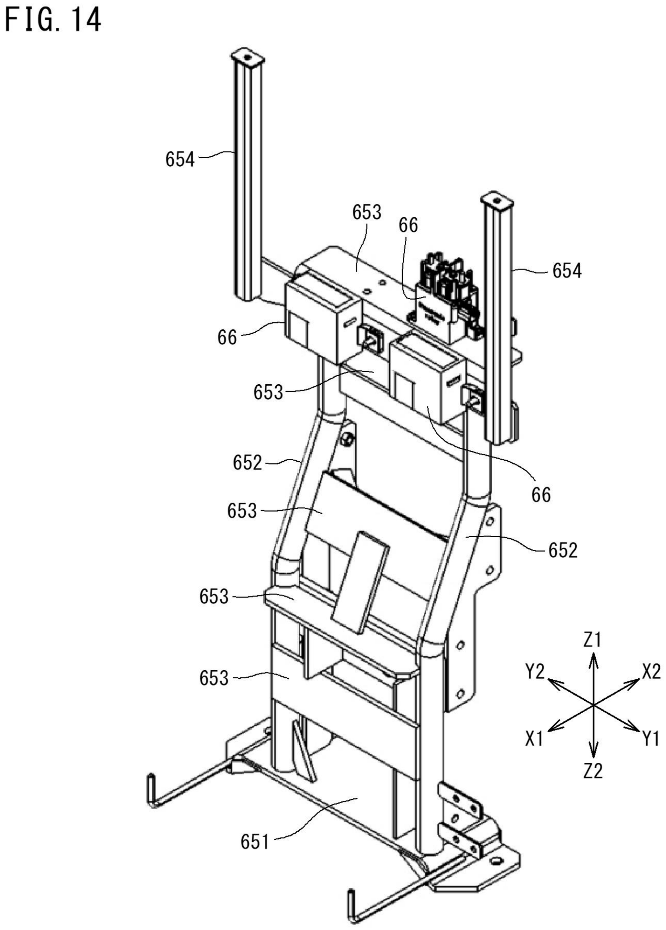

A mounting frame (fixed frame) 65 is provided on the chassis 41 behind the second radiator 49. The mounting frame 65 is provided for attaching the cover 111 and electrical components 66. FIG. 14 is a perspective view of the mounting frame 65 as viewed obliquely from the front left side. The mounting frame 65 includes a base 651, a pair of pillars 652, a plurality of connection plates 653, a pair of mounting stays 654, and the like.

As illustrated in FIG. 12, the base 651 is formed in a band plate shape and is fixed to an upper surface of the gear case 33 of the chassis 41. The pair of pillars 652 is formed in a rod shape. The pair of pillars 652 extends upward from the base 651. The pair of pillars 652 is disposed side by side at intervals in the vehicle-width direction. The plurality of connection plates 653 extends in the vehicle-width direction, and connects upper end portions of the pair of pillars 652 and intermediate portions, in the vertical direction, of the pair of pillars 652. The pair of mounting stays 654 is formed in a rod shape and extends upward from the connection plate 653 at the upper end. As illustrated in FIG. 13, the cover 111 is attached to tips of the mounting stays 654.

The second radiator 49 is supported by the mounting frame 65 via third support members 63. As illustrated in FIG. 12, the third support members 63 are provided on respective sides of the mounting frame 65 in the vehicle-width direction. Each of the third support members 63 includes an arm portion 631 and a coupling portion 632. The arm portion 631 is formed in a plate shape and extends outward in the vehicle-width direction from the corresponding pillar 652 of the mounting frame 65. The coupling portion 632 has a plate shape and extends forward from the tip of the arm portion 631. The coupling portion 632 is connected to a side surface of the second radiator 49 in the vehicle-width direction. Therefore, the second radiator 49 is supported by the mounting frame 65 via the third support members 63 from the rear side.

The second support members 62 and the third support members 63 are connected to an intermediate portion of the second radiator 49 in the vertical direction. Therefore, the second radiator 49 is supported from below by the chassis 41 of the vehicle body 11 and the placing tables 51 via the first support members 61, and is supported from the front-rear direction by fixing members (the fuel cell 24 and the mounting frame 65) fixed to the chassis 41 via the second support members 62 and the third support members 63. Thus, the second radiator 49 is firmly supported from three directions of the lower side, the front side, and the rear side. Since the second radiator 49 is supported from the front and rear by the second support members 62 and the third support members 63, the second radiator 49 can be stably supported against a force in the front-rear direction accompanying the traveling of the work vehicle 10, for example, an inertial force accompanying acceleration/deceleration.

### [Supporting structure of electrical component 66]

The electrical components 66 are attached to the mounting frame 65. Examples of the electrical components 66 include a fuse, a relay, a terminal block, or a control component (CPU, control board, etc.). Cables are connected to these electrical components 66.

The mounting frame 65 is disposed between the fuel cell 24 and the cabin 16 (driver's seat 15) in the front-rear direction. In addition, the mounting frame 65 is disposed between the second radiator 49 and the cabin 16 (driver's seat 15) in the front-rear direction. Accordingly, the electrical components 66 are also disposed between the fuel cell 24 and the cabin 16 (driver's seat 15) and between the second radiator 49 and the cabin 16 (driver's seat 15) in the front-rear direction.

Inside the cabin 16, electric components such as various operation switches, sensors, and the air conditioner 74 are disposed around the driver's seat 15. These electric components are connected to the electrical components 66 via cables.

The electrical components 66 are disposed between the fuel cell 24 and the second radiator 49, and the driver's seat 15 and the cabin 16 in the front-rear direction. Therefore, the electric components inside the cabin 16 and the electrical components 66 can be brought close to each other, and the connectivity between the electric components and the electrical components 66 by the cables can be enhanced. In addition, the electrical components 66 are disposed at a relatively high position by the mounting frame 65, for example, above the center of the second radiator 49 in the vertical direction (for example, above a position of the axis C of the fan). Therefore, the connectivity of the cable to the electrical components 66 can be enhanced, and the maintainability such as inspection and replacement of the electrical components 66 can also be enhanced.

The electric components such as the inverter 81 (see FIG. 5), the DC-DC converters 82 and 83 (see FIG. 5), and the junction box 75 (see FIG. 4) are connected to the electrical components 66 via cables. The inverter 81 and the DC-DC converters 82 and 83 are disposed below the cabin 16 and at a position deviated to one side (left side) in the vehicle-width direction with respect to the chassis 41. The junction box 75 is disposed at the lower front side of the cabin 16 and at a position deviated to one side (right side) in the vehicle-width direction with respect to the chassis 41. The junction box 75 is disposed at a position between the cabin 16 (driver's seat 15) and the fuel cell 24 in the front-rear direction and overlapping the second radiator 49 and the mounting frame 65 in the vehicle-width direction (position aligned in the vehicle-width direction).

The mounting frame 65 and the electrical components 66 are disposed at the center of the vehicle body 11 in the vehicle-width direction. Therefore, it is possible to enhance the connectivity of the cable between the electric components 81, 82, 83, and 75 and the electrical component 66, which are disposed at positions deviated to either of left and right sides of the vehicle body 11.

As illustrated in FIG. 11, the fan 491 of the second radiator 49 generates an air flow from the rear toward the front. The electrical components 66 are disposed behind the second radiator 49, that is, on an air suction side of the second radiator 49. Therefore, outside air having a relatively low temperature before heat exchange flows around the electrical components 66, and the temperature rise of the electrical components 66 is suppressed. In addition, in a case where the electrical component 66 is a component that generates heat such as a relay, cooling of the electrical component can be promoted.

### [Specific configuration of air cleaner 68]

As illustrated in FIGs. 11, 12, and 13, the work vehicle 10 includes an air cleaner 68. The air cleaner 68 cleans air supplied to the fuel cell 24. The air cleaner 68 includes a cleaner body 681 formed in a substantially cylindrical shape, an intake port 682 that takes air into the cleaner body 681, and a discharge port 683 that discharges air from the cleaner body 681. One end of a discharge hose 69 is connected to the discharge port 683. The other end of the discharge hose 69 is connected to the fuel cell 24.

The cleaner body 681 is disposed in a state where an axis of the cylindrical shape is oriented in the vertical direction. The dimensions of the cleaner body 681 in the front-rear direction and the vehicle-width direction are smaller than the dimension of the cleaner body 681 in the vertical direction. The discharge port 683 is disposed on an upper surface of the cleaner body 681. Therefore, the work of connecting the discharge hose 69 to the discharge port 683, and the like can be easily performed.

The intake port 682 is disposed at a lower end portion of an outer peripheral surface of the cleaner body 681. The intake port 682 is formed in a short tubular shape, obliquely projects downward and outward in the vehicle-width direction from the outer peripheral surface of the cleaner body 681, and is opened obliquely downward. Therefore, entry of foreign matter such as dust into the intake port 682 is suppressed. The intake port 682 may be opened not obliquely downward but downward (directly below).

As illustrated in FIG. 11, the air cleaner 68 is disposed between the fuel cell 24 and the cabin 16 (driver's seat 15) in the front-rear direction. Specifically, the air cleaner 68 is disposed between the second radiator 49 and the cabin 16 (driver's seat 15) in the front-rear direction. The air cleaner 68 is disposed further outward than the chassis 41 in the vehicle-width direction. The air cleaner 68 is disposed within the dimension of the second radiator 49 in the vehicle-width direction. The air cleaner 68 and the mounting frame 65 are disposed side by side in the vehicle-width direction.

The air cleaner 68 is disposed on the front side of the left arm portion 631 and on the inner side (right side) of the left coupling portion 632 in the vehicle-width direction, the arm portion 631 and the coupling portion 632 being the third support member 63. The air cleaner 68 is attached to and supported by the third support member 63. Accordingly, the air cleaner 68 is supported by the second radiator 49 and the mounting frame 65 via the third support member 63.

The air cleaner 68 is disposed with the axis of the cylindrical shape oriented in the vertical direction. Therefore, the arrangement space in the front-rear direction and the vehicle-width direction can be reduced. As a result, the air cleaner 68 can be disposed in a narrow space between the second radiator 49 and the cabin 16 in the front-rear direction. In addition, the air cleaner 68 can be disposed in a narrow space between the third support member 63 and the chassis 41 in the vehicle-width direction.

As illustrated in FIG. 13, the discharge hose 69 extends obliquely forward and downward from the discharge port 683 of the air cleaner 68. The discharge hose 69 is disposed to traverse the outside of the second radiator 49 in the vehicle-width direction from the air cleaner 68, which is behind the second radiator 49, to the fuel cell 24, which is in front of the second radiator 49. The discharge hose 69 is disposed further outward than the upper portion the coupling portion 632 of the third support member 63 in the vehicle-width direction. The discharge hose 69 may be supported by the third support member 63. The discharge hose 69 passes between the second radiator 49 and the fuel cell 24 in the front-rear direction, extends in the vehicle-width direction, and is connected to the rear surface of the fuel cell 24.

The air cleaner 68 is disposed behind the second radiator 49, that is, on the air suction side of the second radiator 49. Therefore, air with less contamination at a relatively low temperature before passing through the second radiator 49 can be taken into the air cleaner 68.

As illustrated in FIG. 13, the cover 111 covers above and lateral sides in the vehicle-width direction of the second radiator 49. The cover 111 includes a first cover member 111b and a second cover member 111c. The first cover member 111b covers the right side, above, and an upper portion of the left side of the second radiator 49. The second cover member 111c covers a lower portion of the left side of the second radiator 49.

The first cover member 111b and the second cover member 111c are vertically divided with the discharge hose 69 interposed therebetween. Therefore, a portion of the discharge hose 69 is exposed to the outside. A lower end edge 111b1 of a portion of the first cover member 111b covering the left side surface of the second radiator 49 and an upper end edge 111c1 of the second cover member 111c are formed to be inclined obliquely forward and downward along the discharge hose 69.

The cover 111 covers not only the second radiator 49 but also the air cleaner 68, the mounting frame 65, and the electrical components 66. The first cover member 111b is attached to and supported by the third support member 63 and the mounting frame 65 (mounting stay 654). The second cover member 111c is attached to and supported by the third support member 63.

As described above, the work vehicle 10 of the present embodiment includes the vehicle body 11, the fuel cell 24 installed on the vehicle body 11, the driver's seat 15 installed on the vehicle body 11 aligning with the fuel cell 24 in the front-rear direction, the air cleaner 68 that cleans the air supplied to the fuel cell 24, and the electrical components 66. The air cleaner 68 and the electrical components 66 are disposed between the fuel cell 24 and the driver's seat 15 in the front-rear direction. In addition, the work vehicle 10 of the present embodiment includes the cabin 16 disposed around the driver's seat 15, and the air cleaner 68 and the electrical components 66 are disposed between the fuel cell 24 and the cabin 16 in the front-rear direction. Therefore, the air cleaner 68 and the electrical components 66 can be disposed by effectively utilizing the space between the fuel cell 24, and the driver's seat 15 and the cabin 16.

The vehicle body 11 of the present embodiment includes a hood (first hood) 34 that covers the fuel cell 24, and a cover (second hood) 111 that covers the second radiator 49, the air cleaner 68, and the electrical components 66. Therefore, it is sufficient to open or remove only the cover 111 at the time of performing maintenance such as inspection and replacement of the second radiator 49, the air cleaner 68, and the electrical components 66, and the maintainability can be enhanced.

The work vehicle 10 according to the present embodiment includes the mounting frame 65 disposed between the fuel cell 24 and the cabin 16 (driver's seat 15) in the front-rear direction, and the electrical components 66 are attached to the mounting frame 65. Therefore, the electrical components 66 can be disposed between the fuel cell 24 and the driver's seat 15.

In the work vehicle 10 of the present embodiment, the electrical components 66 and the air cleaner 68 are disposed at positions overlapping in the vehicle-width direction. Therefore, both the electrical components 66 and the air cleaner 68 can be disposed in a narrow space between the fuel cell 24 and the cabin 16 in the front-rear direction.

Although the embodiment has been described above, it will be understood that various changes in form and details can be made without departing from the spirit and scope of the claims.

For example, the fuel cell 24 may be disposed side by side behind the cabin 16 and the driver's seat 15. In this case, the second radiator 49, the air cleaner 68, and the electrical components 66 are disposed behind the cabin 16 and the driver's seat 15 and in front of the fuel cell 24. The fuel cell 24, and the cabin 16 and the driver's seat 15 may be disposed side by side in the vehicle-width direction, and the second radiator 49, the air cleaner 68, the mounting frame 65, the electrical components 66, and the like may be disposed therebetween.

### REFERENCE SIGNS LIST

- 10: work vehicle
- 11: vehicle body
- 13: tank
- 17: installation frame (instruction frame)
- 24: fuel cell
- 34: hood (second hood)
- 49: second radiator
- 51: placing table
- 61: first support member
- 62: second support member
- 63: third support member
- 65: mounting frame (fixed frame)
- 66: electrical component
- 68: air cleaner
- 111: cover (first hood)
- 491: second fan

## Claims

1. A work vehicle comprising: a vehicle body; a fuel cell installed on the vehicle body; a radiator disposed side by side with the fuel cell; and a support member that supports the radiator, wherein the support member includes a first support member connected to the vehicle body and the radiator, and a second support member connected to the fuel cell and the radiator.

2. The work vehicle according to claim 1, further comprising a fixed frame fixed to the vehicle body, wherein the support member includes a third support member connected to the fixed frame and the radiator.

3. The work vehicle according to claim 2, wherein an electrical component is attached to the fixed frame.

4. The work vehicle according to claim 3, wherein the fixed frame is disposed on a side in the radiator where air is sucked.

5. The work vehicle according to claim 4, wherein the radiator includes a fan that is disposed between the fuel cell and the fixed frame and generates an air flow from a side of the fixed frame toward a side of the fuel cell.

6. The work vehicle according to any one of claims 2 to 5, wherein the fuel cell, the radiator, and the fixed frame are disposed in this order.

7. The work vehicle according to any one of claims 1 to 6, further comprising a support frame that supports a fuel tank for the fuel cell, wherein the vehicle body includes a placing table on which the support frame is placed, and the first support member is provided on the placing table.

8. The work vehicle according to any one of claims 1 to 7, wherein the vehicle body includes a first hood that covers the fuel cell and a second hood that covers the radiator.

9. The work vehicle according to any one of claims 1 to 8, further comprising an air cleaner that is disposed side by side with the fuel cell and the radiator and cleans air supplied to the fuel cell, wherein the air cleaner is disposed on a side in the radiator where air is sucked.

10. The work vehicle according to claim 9, wherein the radiator includes a fan that is disposed between the fuel cell and the air cleaner and generates an air flow from a side of the air cleaner toward a side of the fuel cell.
